# EUROPÄISCHE PATENTSCHRIFT

(11) **EP 1 799 893 B1**
(45) Veröffentlichungstag und Bekanntmachung des Hinweises auf die Patenterteilung: **10.04.2019**
(21) Anmeldenummer: 05779353.1
(22) Anmeldetag: 30.08.2005
(51) Int. Cl.: D03D 13/00, B60K 37/00, B60R 13/02

(54) **ARMATURENBRETT ODER INNENVERKLEIDUNG FÜR EIN KRAFTFAHRZEUG**
DASHBOARD OR LINING FOR A MOTOR VEHICLE
TABLEAU DE BORD OU HABILLAGE INTERIEUR POUR VEHICULE

(30) Priorität: 05.10.2004 DE 102004048331
(43) Veröffentlichungstag der Anmeldung: 27.06.2007
(73) Patentinhaber: Volkswagen Aktiengesellschaft, 38440 Wolfsburg (DE)
(72) Erfinder: ANDRONIS, Odysseus, 38302 Wolfenbüttel (DE); HOFMANN, Gustav, 38114 Braunschweig (DE); KLEINDIENST, Niels, 10435 Berlin (DE)
(86) Internationale Anmeldenummer: PCT/EP2005/009304
(87) Internationale Veröffentlichungsnummer: WO 2006/037407

(56) Entgegenhaltungen:
- EP-A- 1 420 094
- WO-A-96/31643
- DE-A1- 10 103 551
- DE-A1- 10 359 123
- DE-A1- 19 608 239
- US-A- 3 132 671
- US-A- 5 394 906
- US-B1- 6 446 675
- POTLURI P ET AL: "Comprehensive drape modelling for moulding 3D textile preforms" Oktober 2001 (2001-10), COMPOSITES PART A: APPLIED SCIENCE AND MANUFACTURING, ELSEVIER SCIENCE PUBLISHERS B.V., AMSTERDAM, NL, PAGE(S) 1415-1424 , XP004299909 ISSN: 1359-835X Absatz [0002]

## Beschreibung

Die Erfindung betrifft ein Armaturenbrett für ein Fahrzeug, insbesondere Kraftfahrzeug, wie es beispielsweise aus DE-A-101 03 551 bekannt ist. Die Erfindung betrifft weiterhin eine Innenverkleidung für ein Fahrzeug, insbesondere Kraftfahrzeug, wie sie beispielsweise aus DE-A-196 08 239 bekannt ist.

Es ist Aufgabe der Erfindung, ein verbessertes Armaturenbrett für ein Fahrzeug, insbesondere Kraftfahrzeug, bzw. eine verbesserte Innenverkleidung für ein Fahrzeug, insbesondere Kraftfahrzeug, anzugeben.

Vorgenannte Aufgabe wird durch ein Armaturenbrett und/oder eine Innenverkleidung für ein Fahrzeug, insbesondere Kraftfahrzeug, entsprechend den in Anspruch 1 definierten Merkmalen gelöst.

Ein derartiger gewebter Überzug kann mit einer von der Oberflächengeometrie des Trägers abhängigen Dichte an Bindungspunkten in Bezug auf Kettfäden und Schussfäden gewebt werden. Ein besonders zum Weben eines vorgenannten gewebten Überzugs geeignetes Webverfahren ist in der EP 0 819 188 B1 und der WO 96/31643 beschrieben. Dabei wird vorteilhafterweise der gewebte Überzug derart gewebt, dass er eine dreidimensionale Kontur umfasst, die im Wesentlichen der Oberflächengeometrie des Trägers in dem Bereich entspricht, auf dem der gewebte Überzug angeordnet wird. Dadurch wird erreicht, dass die Dichte der Bindungspunkte im Wesentlichen unabhängig von der Oberflächengeometrie des Trägers ist, wenn der gewebte Überzug auf dem Träger angeordnet ist.

Es ist dabei erfindungsgemäss vorgesehen, dass der Träger einen Bereich mit einer planen Oberfläche, auf dem ein Teil des gewebten Überzugs angeordnet ist, und einen Bereich mit einer konvexen Oberfläche aufweist, auf dem ein Teil des gewebten Überzugs angeordnet ist, wobei die Dichte der Bindungspunkte des gewebten Überzugs oberhalb des Bereichs des Trägers mit der planen Oberfläche gleich der Dichte der Bindungspunkte des gewebten Überzugs oberhalb des Bereichs des Trägers mit der konvexen Oberfläche ist. Weist der Träger einen Bereich mit einer konkaven Oberfläche auf, auf dem ein Teil des gewebten Überzugs angeordnet ist, ist erfindungsgemäss vorgesehen, dass die Dichte der Bindungspunkte des gewebten Überzugs oberhalb des Bereichs des Trägers mit der planen Oberfläche gleich der Dichte der Bindungspunkte des gewebten Überzugs oberhalb des Bereichs des Trägers mit der konkaven Oberfläche ist.

In weiterhin vorteilhafter Ausgestaltung der Erfindung ist auf einer dem Träger abgewandten Oberfläche des gewebten Überzugs eine Nanobeschichtung angeordnet. Geeignete Nanobeschichtungen können z.B. den folgenden Internetseiten entnommen werden:
- deutsche.nature.com/nsu/stories/040607-9.html
- www.trendforum.de/textil.htm
- www.etc-products.de/Produkte/Textil/textil.htm

Die auf der Internetseite www.etc-products.de/Produkte/Textil/textil.htm offenbarte Nanobeschichtung TCN-7050 ist z.B. eine transparente anorganisch-organische Kompositmatrix mit hydrophoben Endgruppen.

In weiterhin vorteilhafter Ausgestaltung der Erfindung ist in dem Träger zumindest ein Luftkanal angeordnet. Dabei umfasst der Luftkanal vorteilhafterweise zumindest eine von dem gewebten Überzug abgedeckte Luftaustrittsöffnung.

In weiterhin vorteilhafter Ausgestaltung der Erfindung umfasst zumindest ein Kettfaden und/oder zumindest ein Schussfaden Metall, Karbon, ein piezoelektrisches Material und/oder ein elektrolumineszierendes Material. In weiterhin vorteilhafter Ausgestaltung der Erfindung umfasst zumindest ein Kettfaden und/oder zumindest ein Schussfaden einen Metallfaden, einen Karbonfaden, einen Druckmessfaden, einen Heizfaden, einen Temperaturmessfaden, einen piezoelektrischen Faden und/oder einen elektrolumineszierenden Leuchtfaden.

Vorgenannte Aufgabe wird zudem durch ein Fahrzeug, insbesondere Kraftfahrzeug, entsprechend den in Anspruch 12 definierten Merkmalen gelöst.

In vorteilhafter Ausgestaltung der Erfindung weist das Fahrzeug, insbesondere Kraftfahrzeug, eine Windschutzscheibe auf, wobei der gewebte Überzug einen Bereich aufweist, in dem der Lichtabsorbtionsgrad des gewebten Überzugs mit abnehmendem Abstand zur Windschutzscheibe zunimmt.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: ein Ausführungsbeispiel eines Armaturenbretts,
- Fig. 2: einen Querschnitt durch das Armaturenbrett gemäß Fig. 1,
- Fig. 3: einen Ausschnitt eines gewebten Überzugs in einer Prinzipdarstellung,
- Fig. 4: einen Querschnitt durch ein Ausführungsbeispiel eines Bedienelementes,
- Fig. 5: einen Querschnitt durch ein Ausführungsbeispiel eines weiteren Bedienelementes,
- Fig. 6: einen Querschnitt durch ein Ausführungsbeispiel eines weiteren Bedienelementes,
- Fig. 7: ein Ausführungsbeispiel eines weiteren Bedienelementes,
- Fig. 8: eine schematische Darstellung eines Ausführungsbeispiels eines gewebten Überzugs,
- Fig. 9: einen Querschnitt durch ein Ausführungsbeispiel eines Leuchtfadens,
- Fig. 10: einen Querschnitt durch ein weiteres Ausführungsbeispiel eines Leuchtfadens,
- Fig. 11: eine schematische Darstellung eines Ausführungsbeispiels eines Fahrzeuges und
- Fig. 12: einen Querschnitt durch ein Ausführungsbeispiel einer Tür eines Kraftfahrzeuges.

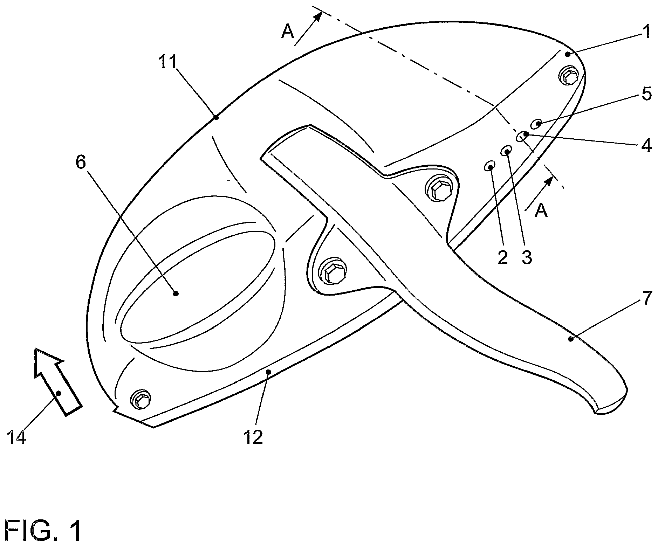

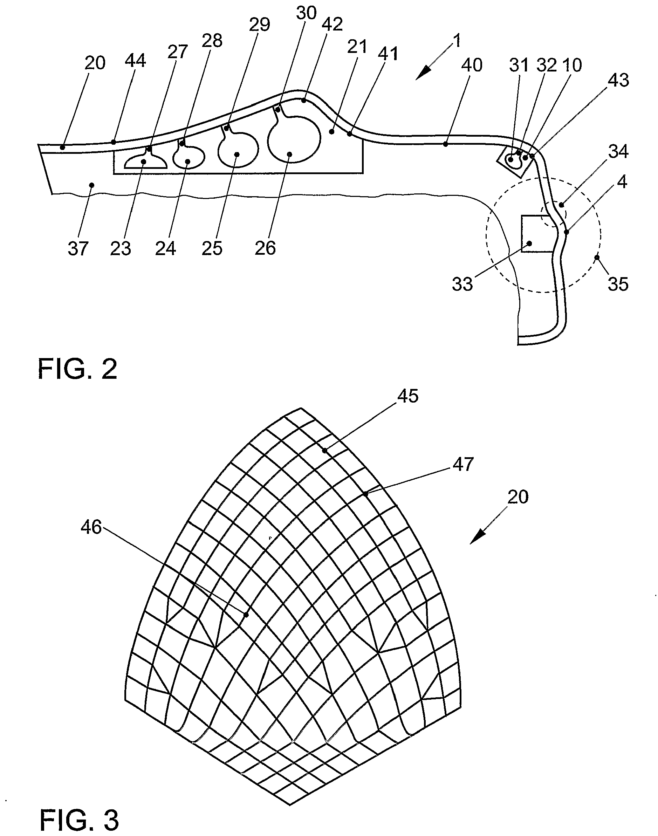

Fig. 1 zeigt ein Ausführungsbeispiel eines Armaturenbretts 1, und Fig. 2 zeigt einen Querschnitt durch das Armaturenbrett 1 gemäß Fig. 1 entlang der Schnittlinie A-A. Bezugszeichen 7 bezeichnet einen Teil einer Mittelkonsole. Das Armaturenbrett 1 weist ein Kombiinstrument 6 auf. Das Armaturenbrett 1 umfasst zudem einen Träger 37 und einen über bzw. auf dem Träger 37 angeordneten gewebten Überzug 20. Auf einer dem Träger 37 abgewandten Oberfläche 44 des gewebten Überzugs 20 ist eine in Fig. 2 nicht dargestellte Nanobeschichtung angeordnet. Geeignete Nanobeschichtungen können z.B. den folgenden Internetseiten entnommen werden:
- deutsche.nature.com/nsu/stories/040607-9.html
- www.trendforum.de/textil.htm
- www.etc-products.de/Produkte/Textil/textil.htm

In dem Träger 37 sind Schaumkörper 10 und 21 mit Luftkanälen 31 bzw. 23, 24, 25, 26 eingelassen. Die Luftkanäle 31, 23, 24, 25, 26 können auch direkt in dem Träger 37 angeordnet werden. Die Luftkanäle 31, 23, 24, 25, 26 umfassen von dem gewebten Überzug 20 abgedeckte Luftaustrittsöffnungen 32, 27, 28, 29, 30.

Der gewebte Überzug 20 umfasst - wie in Fig. 3 als Prinzipdarstellung beispielhaft für den durch den gestrichelten Kreis 34 in Fig. 2 gekennzeichneten Ausschnitt dargestellt - Kettfäden 45 und Schussfäden 46 sowie Bindungspunkte 47 bezüglich der Kettfäden 45 und Schussfäden 46, wobei die Dichte der Bindungspunkte 47 im Wesentlichen unabhängig von der Oberflächengeometrie des Trägers 37 ist. Dazu wird der gewebte Überzug 20 mit einer von der Oberflächengeometrie des Trägers 37 abhängigen Dichte von Bindungspunkten 47 in Bezug auf die Kettfäden 45 und die Schussfäden 46 mittels eines in der EP 0 819 188 B1 und der WO 96/31643 beschrieben Webverfahren gewebt. Dabei wird der gewebte Überzug 20 derart gewebt, dass er eine dreidimensionale Kontur umfasst, die im Wesentlichen der Oberflächengeometrie des Trägers 37 in dem Bereich entspricht, auf dem der gewebte Überzug 20 angeordnet wird. Dadurch wird erreicht, dass die Dichte der Bindungspunkte 47 unabhängig von der Oberflächengeometrie des Trägers 37 ist, wenn der gewebte Überzug 20 auf dem Träger 37 angeordnet ist.

Durch die von der Oberflächengeometrie des Trägers 37 unabhängige Dichte der Bindungspunkte 47 wird erreicht, dass die Dichte der Bindungspunkte des gewebten Überzugs 20 oberhalb eines Bereichs 40 des Trägers 37 mit einer planen Oberfläche gleich der Dichte der Bindungspunkte des gewebten Überzugs 20 oberhalb eines Bereichs 42, 43 des Trägers 37 mit einer konvexen Oberfläche sowie gleich der Dichte der Bindungspunkte des gewebten Überzugs 20 oberhalb eines Bereichs 41 des Trägers 37 mit einer konkaven Oberfläche ist.

Bezugszeichen 11 in Fig. 1 bezeichnet eine einer Windschutzscheibe zugewandte Seite des Armaturenbretts 1. Bezugszeichen 12 in Fig. 1 bezeichnet eine einer Windschutzscheibe abgewandte und einem Innenraum zugewandte Seite des Armaturenbretts 1. In vorteilhafter Ausgestaltung des Armaturenbretts 1 weist der gewebte Überzug einen Lichtabsorbtionsgrad auf, der - angedeutet durch den mit Bezugszeichen 14 bezeichneten Pfeil - mit abnehmendem Abstand zur Windschutzscheibe zunimmt.

Das Armaturenbrett 1 umfasst zudem Bedienelements 2, 3, 4, 5, deren Aufbau am Beispiel des Bedienelementes 4 erläutert ist. Das Bedienelement 4 umfasst ein in den Träger 37 eingelassenes und von dem gewebten Überzug 20 überzogenes Druckmesselement 33, das einen auf den gewebten Überzug 20 über dem Druckmesselement 33 ausgeübten Druck in eine Spannung wandelt.

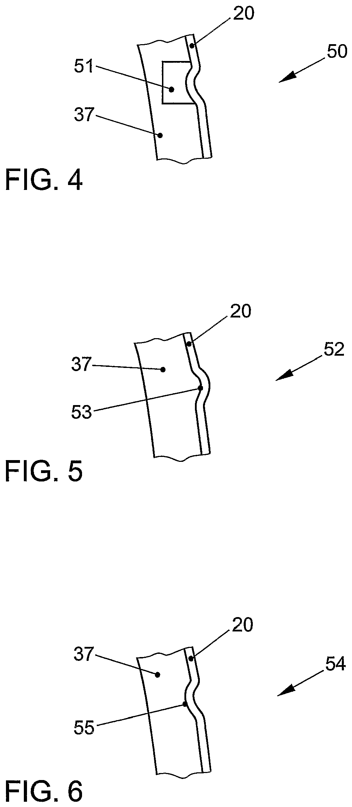

Fig. 4, Fig. 5 und Fig. 6 zeigen Bedienelemente 50, 52 und 54 zur alternativen Ausgestaltung der Bedienelemente 2, 3, 4, 5, wobei die Darstellung in Fig. 4, Fig. 5 und Fig. 6 in etwa dem durch den in Fig. 2 mittels des gestrichelten Kreises 35 markierten Ausschnitt entspricht. Das Bedienelement 50 umfasst ein in den Träger 37 eingelassenes und von dem gewebten Überzug 20 überzogenes Druckmesselement 51, das einen auf den gewebten Überzug 20 über dem Druckmesselement 51 ausgeübten Druck in eine Spannung wandelt. Das Druckmesselement 51 entspricht dem Druckmesselement 33, besitzt jedoch eine konkave Bedienfläche, während das Druckmesselement 33 eine konvexe Bedienfläche besitzt.

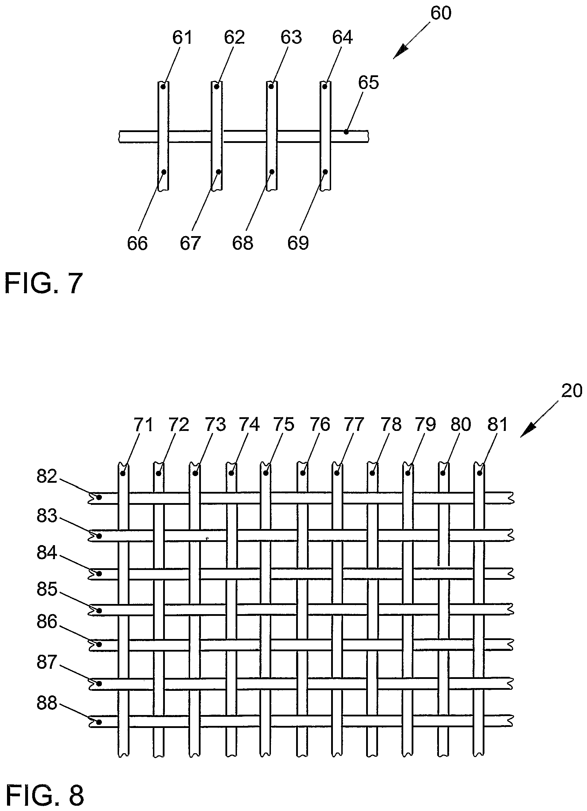

Die Bedienelemente 52 und 54 umfassen einen konvex geformten Bereich 53 des Trägers 37 bzw. einen konkav geformten Bereich 55 des Trägers 37. Zwischen dem konvex geformten Bereich 53 des Trägers 37 bzw. dem konkav geformten Bereich 55 des Trägers 37 und dem gewebten Überzug 20 kann ein in Fig. 7 dargestelltes Bedienelement 60 angeordnet sein, das Druckmessstreifen 61, 62, 63, 64 umfasst, die einen Druckmessstreifen 65 kreuzen. Dabei kann ein mit Bezugszeichen 66 bezeichneter Kreuzungspunkt dem Bedienelement 2, ein mit Bezugszeichen 67 bezeichneter Kreuzungspunkt dem Bedienelement 3, ein mit Bezugszeichen 68 bezeichneter Kreuzungspunkt dem Bedienelement 4 und ein mit Bezugszeichen 69 bezeichneter Kreuzungspunkt dem Bedienelement 5 entsprechen.

Alternativ können auch - wie in Fig. 8 angedeutet - den Druckmessstreifen 61, 62, 63, 64 und 65 entsprechende Druckmessfäden 80, 82 in den gewebten Überzug 20 eingewebt werden. Fig. 8 zeigt dabei eine schematische Darstellung eines Ausführungsbeispiels des gewebten Überzugs 20. Der gewebte Überzug 20 weist einen elektrischen Heizfaden 72, zumindest einen Temperaturmessfaden 73, piezoelektrisches Material aufweisende Fäden 75, 87, die Druckmessfäden 80, 82 und/oder elektrolumineszierende Leuchtfäden 78, 84 auf, die mit Fäden 71, 74, 76, 77, 79, 81, 83, 85, 86, 88, z.B. aus einem textilen Material, verwoben sind.

Der elektrische Heizfaden 72 kann ein, insbesondere isolierter, Metallfaden oder Karbonfaden sein. Es kann auch vorgesehen sein, dass einige der Fäden 71, 74, 76, 77, 79, 81, 83, 85, 86, 88, insbesondere nicht isolierte, Metallfäden oder Karbonfäden sind.

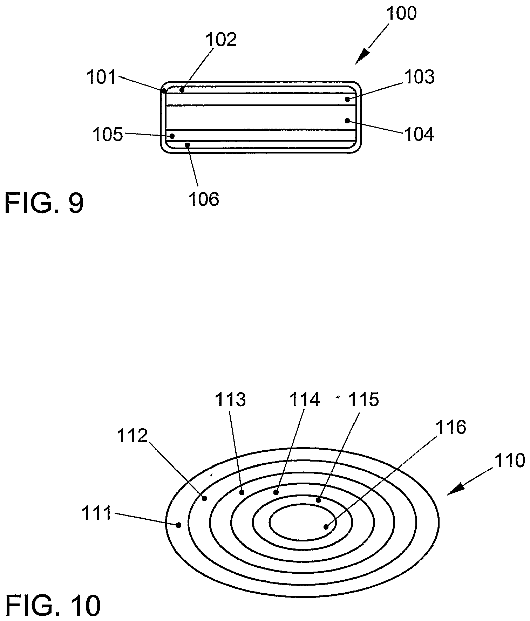

Fig. 9 und Fig. 10 zeigen je einen Querschnitt durch ein Ausführungsbeispiel eines elektrolumineszierenden Leuchtfadens 100 bzw. 110 zur Verwendung als elektrolumineszierender Leuchtfaden 78 und/oder 84. Der elektrolumineszierende Leuchtfaden 100 bzw. 110 weist unter einer transparenten oder semitransparenten Schutzschicht 101 bzw. 111 eine transparente Elektrode 102 bzw. 112, eine transparente Isolationsschicht 103 bzw. 113, eine Licht emittierende Schicht (Pigmentschicht) 104 bzw. 114, eine weitere Isolationsschicht 105 bzw. 115 und eine Rückelektrode 106 bzw. 116 auf.

Die Licht emittierende Schicht (Pigmentschicht) 104 bzw. 114 kann aus einem Material gebildet sein, bei dem Zinksulfid (ZnS) als das Basismaterial verwendet ist und dem eine geringe Menge eines Licht emittierenden Kerns (Mn) zugegeben ist. Licht wird mittels der Licht emittierenden Schicht (Pigmentschicht) 104 bzw. 114 durch Anlegen eines elektrischen Wechselfeldes über die transparente Elektrode 102 bzw. 112 und die Rückelektrode 106 bzw. 116, die mit nicht dargestellten elektrischen Kontakten verbunden sind, unter Verwendung einer nicht dargestellten Energiequelle emittiert. Um mit dieser elektrolumineszierenden Schicht eine Lichtemissionsluminanz von 70 cd/m2 oder mehr zu erreichen, beträgt die Mn-Konzentration z.B. etwa 0.4-0.6 Gew.-% (gegenüber dem Zinksulfid). Eine derartige elektrolumineszierende Schicht kann z.B. mittels eines Vakuumabscheidungsverfahrens, mittels Atomschichtkristallzüchtung (ALE), mittels chemischer Dampfabscheidung oder mittels Sputtern erzeugt werden. Nähere Einzelheiten zur beispielhaften Herstellung einer solchen elektrolumineszierenden Schicht können der DE 43 32 209 A1 entnommen werden.

Die Licht emittierende Schicht 104 bzw. 114 kann zudem ZnSe und/oder ZnS/CdS aufweisen oder im wesentlichen aus ZnSe und/oder ZnS/CdS bestehen. Sofern die Pigmentschicht 104 bzw. 114 im wesentlichen aus ZnS, ZnSe und/oder ZnS/CdS besteht, schließt dies nicht aus, dass kleine Mengen (im Prozentbereich) anderer Elemente wie etwa 0.4-0.6 Gew.-% Mn vorgesehen sind, d.h. z.B. dass die Pigmentschicht 104 bzw. 114 metalldotiert ist.

Weitere mögliche Ausgestaltungen der Licht emittierenden Schicht 104 bzw. 114 können der EP 0 699 730 B1 entnommen werden.

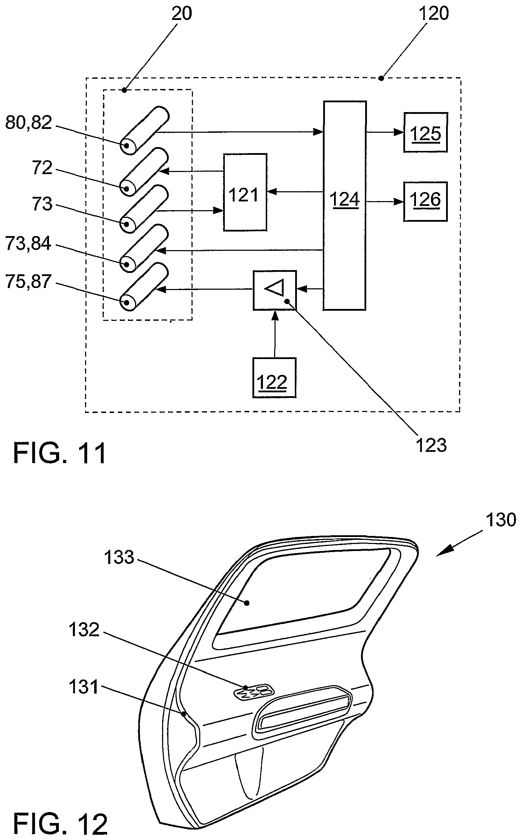

Fig. 11 zeigt eine schematische Darstellung eines Ausführungsbeispiels eines Fahrzeuges 120 mit dem gewebten Überzug 20 insbesondere zur Anordnung an im Innenraum des Fahrzeuges 120 sichtbaren Flächen der Karosserie des Fahrzeuges 120, wie z.B. einem in Fig. 1 dargestellten Armaturenbrett 1 oder einer Innenverkleidung 131 einer in Fig. 12 dargestellten Tür 130. Das Fahrzeug 120 umfasst eine Regelung 121, mittels der der Heizfaden 72 mit elektrischer Energie versorgbar ist. Mittels eines von dem Temperaturmessfaden 73 gelieferten Signals regelt die Regelung 121 den elektrischen Heizfaden 72 derart, dass sich der elektrische Heizfaden 72 durch seinen Betrieb auf eine Temperatur zwischen 30°C und 35°C erwärmt. Alternativ kann auch von einer Regelung der Temperatur abgesehen werden, wobei die Regelung 121 durch eine Energieversorgungseinrichtung ersetzt wird. In diesem Fall sind die Energieversorgungseinrichtung und der elektrische Heizfaden 72 derart aufeinander abgestimmt, also insbesondere ein elektrischer Widerstand des elektrischen Heizfadens 72 derart gewählt, dass sich der elektrische Heizfaden 72 durch seinen Betrieb auf eine Temperatur kleiner 40°C, insbesondere auf eine Temperatur zwischen 30°C und 35°C, erwärmt. Zum Ein- bzw. Ausschalten des elektrischen Heizfadens 72 bzw. dessen Regelung 121 bzw. dessen Energieversorgungseinrichtung ist z.B. ein entsprechendes u. a. mittels des Druckmessfadens 80 implementiertes Bedienelement vorgesehen, dessen Bedienung durch eine Auswerteschaltung 124 erkannt wird, die wiederum die Regelung 121 bzw. die Energieversorgungseinrichtung ansteuert.

Zum Ein- bzw. Ausschalten der Leuchtfäden 78, 84 ist z.B. ein entsprechendes u. a. mittels des Druckmessfadens 82 implementiertes Bedienelement vorgesehen, dessen Bedienung ebenfalls durch die Auswerteschaltung 124 erkannt wird.

In vorteilhafter Ausgestaltung umfasst der gewebte Überzug 20 weiterhin piezoelektrisches Material aufweisende Fäden 75, 87, die als Lautsprecher wirken. Einzelheiten einer entsprechenden akustischen Wirkung können der Internetseite www.panphonics.fi/technology/audio_app_theory.html entnommen werden. Die piezoelektrisches Material aufweisenden Fäden 75, 87 sind optional über einen einstellbaren Verstärker 123 mit einem Infotainmentmodul 122 verbunden. Unter einem Infotainmentmodul im Sinne der Erfindung soll (u. a.) ein Navigationssystem, ein Informationssystem, ein Telefon, eine Musikanlage und/oder ein Sprachsystem verstanden werden. Auf diese Weise sind mittels der piezoelektrisches Material aufweisenden Fäden 75, 87 Töne, Musik und/oder Sprache in den Innenraum des Fahrzeuges 120 abstrahlbar. Zum Vergrößern oder Verringern der Verstärkung des einstellbaren Verstärkers 123 ist z.B. ein entsprechendes mittels weiterer Druckmessfäden implementiertes Bedienelement vorgesehen, dessen Bedienung ebenfalls durch die Auswerteschaltung 124 erkannt wird.

Bezugszeichen 125 und 126 bezeichnen weitere Funktionen, die durch weitere, z.B. mittels weiterer Druckmessfäden implementierte, Bedienelemente bedienbar sind, deren Bedienung ebenfalls durch die Auswerteschaltung 124 erkannt wird. Eine solche Funktion kann z.B. ein Fensterheber zum Herunter- und Herauffahren einer Scheibe 133 einer in Fig. 12 dargestellten Tür 130 eines Kraftfahrzeuges sein. Die Bedienelemente 132 zur Bedienung des Fensterhebers sind dabei als Druckmessfäden in einem dem gewebten Überzug 20 entsprechenden gewebten Überzug der Innenverleidung 131 der Tür 130 eingewebt.

Die Elemente und Schichten in den Figuren sind unter Berücksichtigung von Einfachheit und Klarheit und nicht notwendigerweise maßstabsgetreu gezeichnet. So sind z.B. die Größenordnungen einiger Elemente bzw. Schichten deutlich übertrieben gegenüber anderen Elementen bzw. Schichten dargestellt, um das Verständnis der Ausführungsbeispiele der vorliegenden Erfindung zu verbessern.

### Bezugszeichenliste

- 1: Armaturenbrett
- 2, 3, 4, 5, 50, 52, 54, 60, 132: Bedienelement
- 6: Kombiinstrument
- 7: Teil einer Mittelkonsole
- 10, 21: Schaumkörper
- 11, 12: Seite
- 14: Pfeil
- 20: gewebter Überzug
- 23, 24, 25, 26, 31: Luftkanal
- 27, 28, 29, 30, 32: Luftaustrittsöffnung
- 33, 51: Druckmesselement
- 34, 35: gestrichelter Kreis
- 37: Träger
- 40, 41, 42, 43, 53, 55: Bereich
- 44: Oberfläche eines gewebten Überzugs
- 45: Kettfaden
- 46: Schussfaden
- 47: Bindungspunkt
- 61, 62, 63, 64, 65: Druckmessstreifen
- 66, 67, 68, 69: Kreuzungspunkt
- 71, 74, 76, 77, 79, 81, 83, 85, 86, 88: Faden
- 72: Heizfaden
- 73: Temperaturmessfaden
- 75, 87: piezoelektrisches Material aufweisender Faden
- 78, 84, 100, 110: Leuchtfaden
- 80, 82: Druckmessfaden
- 101, 111: Schutzschicht
- 102, 112: transparente Elektrode
- 103, 105, 113, 115: Isolationsschicht
- 104, 114: Pigmentschicht / Licht emittierende Schicht
- 106, 116: Rückelektrode
- 120: Fahrzeug
- 121: Regelung
- 122: Infotainmentmodul
- 123: Verstärker
- 124: Auswerteschaltung
- 125, 126: weitere Funktion
- 130: Tür
- 131: Innenverleidung
- 133: Scheibe

## Patentansprüche

1. Armaturenbrett (1) oder Innenverkleidung (131) für ein Fahrzeug (120), insbesondere Kraftfahrzeug, mit einem Träger (37) und einem über dem Träger (37) angeordneten gewebten Überzug (20), wobei der gewebte Überzug (20) Kettfäden (45) und Schussfäden (46) sowie Bindungspunkte (47) bezüglich der Kettfäden (45) und Schussfäden (46) umfasst, und wobei die Dichte der Bindungspunkte (47) derart unabhängig von der Oberflächengeometrie des Trägers (37) ist, dass der Träger (37) einen Bereich (40) mit einer planen Oberfläche, auf dem ein Teil des gewebten Überzugs (20) angeordnet ist, und einen Bereich (42, 43) mit einer konvexen Oberfläche aufweist, auf dem ein Teil des gewebten Überzugs (20) angeordnet ist, wobei die Dichte der Bindungspunkte (47) des gewebten Überzugs (20) oberhalb des Bereichs (40) des Trägers (37) mit der planen Oberfläche gleich der Dichte der Bindungspunkte (47) des gewebten Überzugs (20) oberhalb des Bereichs (42, 43) des Trägers (37) mit der konvexen Oberfläche ist, oder dass der Träger (37) einen Bereich (40) mit einer planen Oberfläche, auf dem ein Teil des gewebten Überzugs (20) angeordnet ist, und einen Bereich (41) mit einer konkaven Oberfläche aufweist, auf dem ein Teil des gewebten Überzugs (20) angeordnet ist, wobei die Dichte der Bindungspunkte (47) des gewebten Überzugs (20) oberhalb des Bereichs (40) des Trägers (37) mit der planen Oberfläche gleich der Dichte der Bindungspunkte (47) des gewebten Überzugs (20) oberhalb des Bereichs (41) des Trägers (37) mit der konkaven Oberfläche ist.

2. Armaturenbrett (1) oder Innenverkleidung (131) nach Anspruch 1, **dadurch gekennzeichnet, dass** auf einer dem Träger (37) abgewandten Oberfläche (44) des gewebten Überzugs (20) eine Nanobeschichtung angeordnet ist.

3. Armaturenbrett (1) oder Innenverkleidung (131) nach einem der vorhergehenden Ansprüche, **dadurch gekennzeichnet, dass** in dem Träger (37) zumindest ein Luftkanal (23, 24, 25, 26, 31) angeordnet ist.

4. Armaturenbrett (1) oder Innenverkleidung (131) nach Anspruch 3, **dadurch gekennzeichnet, dass** der Luftkanal (23, 24, 25, 26, 31) zumindest eine von dem gewebten Überzug (20) abgedeckte Luftaustrittsöffnung (27, 28, 29, 30, 32) umfasst.

5. Armaturenbrett (1) oder Innenverkleidung (131) nach einem der vorhergehenden Ansprüche, **dadurch gekennzeichnet, dass** zumindest ein Kettfaden (45) und/oder zumindest ein Schussfaden (46) einen Metallfaden (72) umfasst.

6. Armaturenbrett (1) oder Innenverkleidung (131) nach einem der vorhergehenden Ansprüche, **dadurch gekennzeichnet, dass** zumindest ein Kettfaden (45) und/oder zumindest ein Schussfaden (46) einen Karbonfaden (72) umfasst.

7. Armaturenbrett (1) oder Innenverkleidung (131) nach einem der vorhergehenden Ansprüche, **dadurch gekennzeichnet, dass** zumindest ein Kettfaden (45) und/oder zumindest ein Schussfaden (46) einen Druckmessfaden (80, 82) umfasst.

8. Armaturenbrett (1) oder Innenverkleidung (131) nach einem der vorhergehenden Ansprüche, **dadurch gekennzeichnet, dass** zumindest ein Kettfaden (45) und/oder zumindest ein Schussfaden (46) einen Heizfaden (72) umfasst.

9. Armaturenbrett (1) oder Innenverkleidung (131) nach einem der vorhergehenden Ansprüche, **dadurch gekennzeichnet, dass** zumindest ein Kettfaden (45) und/oder zumindest ein Schussfaden (46) einen Temperaturmessfaden (73) umfasst.

10. Armaturenbrett (1) oder Innenverkleidung (131) nach einem der vorhergehenden Ansprüche, **dadurch gekennzeichnet, dass** zumindest ein Kettfaden (45) und/oder zumindest ein Schussfaden (46) einen elektrolumineszierenden Leuchtfaden (78, 84, 100, 110) umfasst.

11. Armaturenbrett (1) oder Innenverkleidung (131) nach einem der vorhergehenden Ansprüche, **dadurch gekennzeichnet, dass** zumindest ein Kettfaden (45) und/oder zumindest ein Schussfaden (46) einen piezoelektrischen Faden (75, 87) umfasst.

12. Fahrzeug (120), insbesondere Kraftfahrzeug, **dadurch gekennzeichnet, dass** es ein Armaturenbrett (1) und/oder eine Innenverkleidung (131) nach einem der vorhergehenden Ansprüche umfasst.

13. Fahrzeug (120), insbesondere Kraftfahrzeug, nach Anspruch 12, **dadurch gekennzeichnet, dass** es eine Windschutzscheibe aufweist und dass der gewebte Überzug (20) einen Bereich aufweist, in dem der Lichtabsorbtionsgrad des gewebten Überzugs (20) mit abnehmendem Abstand zur Windschutzscheibe zunimmt.

## Claims

1. Dashboard (1) or interior trim panel (131) for a vehicle (120), in particular a motor vehicle,
having a support (37) and a woven covering (20) which is arranged over the support (37), the woven covering (20) comprising warp threads (45), weft threads (46) and weave points (47) with regard to the warp threads (45) and weft threads (46), and the density of the weave points (47) being independent of the surface geometry of the support (37) in such a way that the support (37) has a region (40) with a planar surface, on which region (40) a part of the woven covering (20) is arranged, and a region (42, 43) with a convex surface, on which region (42, 43) a part of the woven covering (20) is arranged, the density of the weave points (47) of the woven covering (20) above the region (40) of the support (37) with the planar surface being equal to the density of the weave points (47) of the woven covering (20) above the region (42, 43) of the support (37) with the convex surface,
or in such a way that the support (37) has a region (40) with a planar surface, on which region (40) a part of the woven covering (20) is arranged, and a region (41) with a concave surface, on which region (41) a part of the woven covering (20) is arranged, the density of the weave points (47) of the woven covering (20) above the region (40) of the support (37) with the planar surface being equal to the density of the weave points (47) of the woven covering (20) above the region (41) of the support (37) with the concave surface.

2. Dashboard (1) or interior trim panel (131) according to Claim 1, **characterized in that** a nanocoating is arranged on a surface (44) of the woven covering (20), which surface (44) faces away from the support (37).

3. Dashboard (1) or interior trim panel (131) according to either of the preceding claims, **characterized in that** at least one air duct (23, 24, 25, 26, 31) is arranged in the support (37).

4. Dashboard (1) or interior trim panel (131) according to Claim 3, **characterized in that** the air duct (23, 24, 25, 26, 31) comprises at least one air outlet opening (27, 28, 29, 30, 32) which is covered by the woven covering (20).

5. Dashboard (1) or interior trim panel (131) according to one of the preceding claims, **characterized in that** at least one warp thread (45) and/or at least one weft thread (46) comprise/comprises a metal fibre (72).

6. Dashboard (1) or interior trim panel (131) according to one of the preceding claims, **characterized in that** at least one warp thread (45) and/or at least one weft thread (46) comprise/comprises a carbon fibre (72).

7. Dashboard (1) or interior trim panel (131) according to one of the preceding claims, **characterized in that** at least one warp thread (45) and/or at least one weft thread (46) comprise/comprises a pressure measurement filament (80, 82).

8. Dashboard (1) or interior trim panel (131) according to one of the preceding claims, **characterized in that** at least one warp thread (45) and/or at least one weft thread (46) comprise/comprises a heating filament (72).

9. Dashboard (1) or interior trim panel (131) according to one of the preceding claims, **characterized in that** at least one warp thread (45) and/or at least one weft thread (46) comprise/comprises a temperature measurement filament (73).

10. Dashboard (1) or interior trim panel (131) according to one of the preceding claims, **characterized in that** at least one warp thread (45) and/or at least one weft thread (46) comprise/comprises an electroluminescent illuminating filament (78, 84, 100, 110).

11. Dashboard (1) or interior trim panel (131) according to one of the preceding claims, **characterized in that** at least one warp thread (45) and/or at least one weft thread (46) comprise/comprises a piezoelectric filament (75, 87) .

12. Vehicle (120), in particular motor vehicle, **characterized in that** it comprises a dashboard (1) and/or an interior trim panel (131) according to one of the preceding claims.

13. Vehicle (120), in particular motor vehicle, according to Claim 12, **characterized in that** it has a windscreen, and **in that** the woven covering (20) has a region, in which the degree of light absorption of the woven covering (20) increases as the spacing from the windscreen decreases.

## Revendications

1. Tableau de bord (1) ou habillage intérieur (131) pour un véhicule (120), en particulier un véhicule automobile, comprenant un support (37) et un revêtement tissé (20) disposé par-dessus le support (37), le revêtement tissé (20) comprenant des fils de chaîne (45) et des fils de trame (46) ainsi que les points de liaison (47) entre les fils de chaîne (45) et les fils de trame (46), et la densité des points de liaison (47) étant indépendante de la géométrie de la surface du support (37) de sorte que le support (37) présente une région (40) avec une surface plane sur laquelle est disposée une partie du revêtement tissé (20), et une région (42, 43) avec une surface convexe sur laquelle est disposée une partie du revêtement tissé (20), la densité des points de liaison (47) du revêtement tissé (20) au-dessus de la région (40) du support (37) avec la surface plane étant égale à la densité des points de liaison (47) du revêtement tissé (20) au-dessus de la région (42, 43) du support (37) avec la surface convexe,
ou de sorte que le support (37) présente une région (40) avec une surface plane sur laquelle est disposée une partie du revêtement tissé (20), et une région (41) avec une surface concave sur laquelle est disposée une partie du revêtement tissé (20), la densité des points de liaison (47) du revêtement tissé (20) au-dessus de la région (40) du support (37) avec la surface plane étant égale à la densité des points de liaison (47) du revêtement tissé (20) au-dessus de la région (41) du support (37) avec la surface concave.

2. Tableau de bord (1) ou habillage intérieur (131) selon la revendication 1, **caractérisé en ce que** sur une surface (44) du support tissé (20) opposée au support (37) est disposé un nano-revêtement.

3. Tableau de bord (1) ou habillage intérieur (131) selon l'une quelconque des revendications précédentes, **caractérisé en ce qu'**au moins un canal d'air (23, 24, 25, 26, 31) est disposé dans le support (37).

4. Tableau de bord (1) ou habillage intérieur (131) selon la revendication 3, **caractérisé en ce que** le canal d'air (23, 24, 25, 26, 31) comprend au moins une ouverture de sortie d'air (27, 28, 29, 30, 32) recouverte par le revêtement tissé (20).

5. Tableau de bord (1) ou habillage intérieur (131) selon l'une quelconque des revendications précédentes, **caractérisé en ce qu'**au moins un fil de chaîne (45) et/ou au moins un fil de trame (46) comprend un fil métallique (72).

6. Tableau de bord (1) ou habillage intérieur (131) selon l'une quelconque des revendications précédentes, **caractérisé en ce qu'**au moins un fil de chaîne (45) et/ou au moins un fil de trame (46) comprend un fil de carbone (72).

7. Tableau de bord (1) ou habillage intérieur (131) selon l'une quelconque des revendications précédentes, **caractérisé en ce qu'**au moins un fil de chaîne (45) et/ou au moins un fil de trame (46) comprend un fil de mesure de pression (80, 82).

8. Tableau de bord (1) ou habillage intérieur (131) selon l'une quelconque des revendications précédentes, **caractérisé en ce qu'**au moins un fil de chaîne (45) et/ou au moins un fil de trame (46) comprend un fil chauffant (72).

9. Tableau de bord (1) ou habillage intérieur (131) selon l'une quelconque des revendications précédentes, **caractérisé en ce qu'**au moins un fil de chaîne (45) et/ou au moins un fil de trame (46) comprend un fil de mesure de température (73).

10. Tableau de bord (1) ou habillage intérieur (131) selon l'une quelconque des revendications précédentes, **caractérisé en ce qu'**au moins un fil de chaîne (45) et/ou au moins un fil de trame (46) comprend un fil lumineux électroluminescent (78, 84, 100, 110).

11. Tableau de bord (1) ou habillage intérieur (131) selon l'une quelconque des revendications précédentes, **caractérisé en ce qu'**au moins un fil de chaîne (45) et/ou au moins un fil de trame (46) comprend un fil piézoélectrique (75, 87).

12. Véhicule (120), en particulier véhicule automobile, **caractérisé en ce qu'**il comprend un tableau de bord (1) et/ou un habillage intérieur (131) selon l'une quelconque des revendications précédentes.

13. Véhicule (120), en particulier véhicule automobile selon la revendication 12, **caractérisé en ce qu'**il présente un pare-brise et **en ce que** le revêtement tissé (20) présente une région dans laquelle le degré d'absorption de la lumière du revêtement tissé (20) augmente avec la diminution de la distance au pare-brise.
